Europäisches Patentamt

European Patent Office

Office européen des brevets

(19)

(11) Veröffentlichungsnummer : **0 007 606**
**B1**

(12) **EUROPÄISCHE PATENTSCHRIFT**

(45) Veröffentlichungstag der Patentschrift :
17.03.82

(21) Anmeldenummer : 79102593.5

(22) Anmeldetag : 23.07.79

(51) Int. Cl.³ : **C 08 J  5/16, H 01 R 39/20,**
**F 16 C  33/16, F 16 J 15/30,**
**C 04 B  41/04**

(54) **Imprägnierter Kohlegleitkörper mit verbesserten Gleiteigenschaften.**

(30) Priorität : 21.07.78 DE 2832048.

(43) Veröffentlichungstag der Anmeldung :
06.02.80 (Patentblatt 80/03)

(45) Bekanntmachung des Hinweises auf die Patenterteilung : 17.03.82 Patentblatt 82/11

(84) Benannte Vertragsstaaten :
CH FR GB IT SE

(56) Entgegenhaltungen :
DE - B - 1 241 903
DE - B - 1 269 754
DE - B - 1 926 126
GB - A - 586 965
GB - A - 601 306
US - A - 2 412 701

REVUE GENERALE DE L'ELECTRICITE,
Vol. 79, Nr. 8, September 1970 Paris, FR.
J. BEKINK et al. : « Les difficultés rencontrées
sur les machines électriques avec les balais en
charbon ; moyens destinés à éliminer ces difficultés », Seiten 677-681

(73) Patentinhaber : Schunk & Ebe GmbH
Rodheimer Strasse 59-61
D-6301 Heuchelheim (DE)

(72) Erfinder : Diegelmann, Winfried
Kropbachstrasse 31
D-6300 Heuchelheim (DE)
Erfinder : Götze, Burkhard, Dr. Dipl.-Phys.
Giessener Strasse 88
D-6300 Launsbach (DE)
Erfinder : Sauer, Karl-Heinz, Ing.-grad.
Breslauer Strasse 10
Biebertal 1 (DE)
Erfinder : Schardt, Günter, Ing.-grad.
Hofmannstrasse 8
D-6300 Giessen (DE)

Imprägnierter Kohlegleitkörper mit verbesserten Gleiteigenschaften

Die Erfindung betrifft einen imprägnierten Kohlegleitkörper mit verbesserten Gleiteigenschaften. Imprägnierte Kohlegleitkörper sind z.B. Kohlebürsten für elektrische Maschinen, Kohlegleitringe für Gleitringdichtungen und Kohlelager. Kohlegleitkörper aus Kohlenstoff und Graphit werden häufig mit verschiedenen organischen oder anorganischen Substanzen zur Verbesserung der Gleiteigenschaften imprägniert. In einigen Fällen, wie z.B. den Gleitringen, ist die vollständige Abdichtung der Poren Ziel der Imprägnierung.

Aus der DE-OS 10 91 218 ist es bekannt, Kohlebürsten mit einem Gemisch eines nicht gesättigten Polyesterharzes mit einem mit dem Polymer copolymerisierbaren Arylvinylmonomer, z.B. Styrolmonomer zu imprägnieren. So imprägnierte Kohlebürsten können jedoch nicht bei erhöhter Temperatur eingesetzt werden. Die mit einem Abbindekatalysator versetzte Imprägnierflüssigkeit ist nicht lagerfähig.

Aus der DE-PS 19 26 126 ist ein Verfahren zum Imprägnieren und/oder Abdichten von Metallgußgegenständen bekannt, das zur Imprägnierung monomere Ester der Metharcrylsäure und/oder Acrylsäure mit mehrwertigem Alkohol einzeln oder im Gemisch verwendet und in Abwesenheit eines Polymerisationskatalysator durch Erwärmung aushärtet. Das Imprägniermittel kann beispielsweise Triäthylenglykoldimethacrylat sein.

In der DE-OS 25 20 529 wird ein Imprägnierverfahren zur Anwendung bei porösen Metallteilen beschrieben, das von polymerisierbaren, monomeren Acrylsäureestern ausgeht. Die Reinigung der Oberfläche mit einer wässrigen Lösung eines Tensids sowie die Aushärtung mit Hilfe von Peroxyverbindungen sind Kennzeichen des Verfahrens. Die Imprägnierlösung ist nicht lagerfähig.

Allgemein ist die Verwendung von Phenolharzen zur Imprägnierung von Kohlegleitkörpern bekannt. Abgesehen von den Umweltproblemen, die bei der Verarbeitung von Phenolharzen gegeben sind, gibt es verschiedene Betriebsdedingungen für die Eigenschaften phenolharzimprägnierter Kohlegleitkörper nicht optimal sind. Beispielsweise neigen diese bei Stoßbelastung leicht zu Abplatzungen.

Aufgabe der Erfindung ist es, einen imprägnierten Kohlegleitkörper mit verbesserten Gleiteigenschaften zu schaffen, der obengenannten Nachteile nicht aufweist.

Die Lösung der Aufgabe besteht in einem Kohlegleitkörper, der in seinen Poren polymersiertes Triäthylenglykoldimethacrylat enthält.

Überraschenderweise hat sich gezeigt, daß mit Triäthylenglykoldimethacrylat imprägnierte Kohlegleitkörper bei erhöhten Betriebstemperaturen wesentlich bessere Gleiteigenschaften als mit Phenolharz imprägnierte Kohlegleitkörper zeigen. Ein Grund hierfür liegt offensichtlich darin, daß das Triäthylenglykoldimethacrylat bei erhöhter Temperatur sehr elastisch wird, obwohl es bei Raumtemperatur glashart ist. Die besseren Gleiteigenschaften der Kohlegleitkörper mit Triäthylenglykoldimethacrylat finden ihren Ausdruck in den wesentlich niedrigeren Verschleißwerten gegenüber herkömmlichen Imprägnierungen.

Ein weiterer Vorteil der Imprägnierung von Kohlegleitkörpern mit Triäthylenglykoldimethacrylat liegt darin, daß das Imprägnierverfahren relativ einfach und kostengünstig durchzuführen ist. Triäthylenglykoldimethacrylat ist ein dünnflüssiges Monomer, das bei erhöhter Temperatur zu einem unschmelzbaren, unlöslichen Kunststoff polymerisiert, also ein Duroplast darstellt. Das Monomer wird ausschließlich durch eine Temperaturbehandlung in Abwesenheit eines Polymerisationskatalysators ausgehärtet. Hierdurch ist eine unbegrenzte Lagerfähigkeit des Imprägniermittels gegeben. Selbstverständlich ist es jedoch auch möglich, wahlweise zur Beschleunigung der Polymerisation einen Härter dem Monomer zuzumischen. Die Imprägnierung erfolgt nach der üblichen Vakuum-Druck-Methode. Die Oberflächenreinigung der imprägnierten Teile wird in Wasser und/oder Spiritus vorgenommen. Die Aushärtung erfolgt unter Druck bei 150 °C über 15 Stunden. Eine Härtung bei Normaldruck ist wegen starken Imprägniermittelaustritts nicht möglich. Da während der Polymerisation keine Abspaltprodukte gebildet werden, ist die Porenbildung gering und die Abdichtungsquote nach der ersten Imprägnierung hoch.

Es ist auch darauf hinzuweisen, daß Triäthylenglykoldimethacrylat im Gegenzatz zu Phenolharzen nicht toxisch ist, keine Geruchsbelästigung hervorruft und sich problemlos entsorgen läßt, da es im Spülwasser durch Erwärmung oder Zugabe von Härtern ausgehärtet und somit schadlos deponiert werden kann.

Zur weiteren Erläuterung der Erfindung wird im folgenden ein Beispiel zur Herstellung erfindungsgemäßer Kohlegleitkörper angegeben.

Kohlenstoffkörper mit den Abmessungen 194 × 130 × 10 mm wurden in einem Imprägnierkorb aus Lochblech auf Abstand gesetzt und in einem evakuierbaren Druckbehälter während 30 Minuten bei ca. 20 mbar evakuiert.

Danach wurde das Imprägniermittel, monomeres Triäthylenglykoldimethacrylat, kopfseitig in den Imprägnierkessel eingesaugt, bis die zu imprägnierenden Kohlenstoffkörper vollständig vom Imprägniermittel bedeckt waren. Hierauf wurde der Imprägnierkessel belüftet. Mittels Preßluft wurde ein Druck von ca. 5 bar aufgebracht und über eine Zeit von etwa 2 Stunden gehalten.

Der Imprägnierkorb wurde sodann aus dem Kessel herausgenommen und etwa 15 Minuten über der Imprägnierflüssigkeit aufgehängt, so daß das Imprägniermittel abtropfen konnte.

Anschließend wurden die imprägnierten Teile in Leitungswasser unter starker Bewegung des Imprägniergutes gespült. In einem zweiten Behälter wurde in Spiritus gespült.

Nach Lufttrocknung über Nacht wurden die imprägnierten Kohlenstoffkörper in einen Druckkessel bei 5 bar während 8 Stunden auf eine Temperatur von 150 °C aufgeheizt und bei dieser Temperatur weitere 7 Stunden gehalten. Die anschließend entnommenen Kohlenstoffkörper waren durchimprägniert und zeigten an der Oberfläche keine ausgetretenen Imprägniermittelreste.

Erfindungsgemäß imprägnierte Kohlegleitkörper finden Anwendung als Kohlebürsten, Kohlelager und Kohlegleitringe.

In Versuchen wurde ermittelt, daß mit Triäthylenglykoldimethacrylat imprägnierte Kohlenstofflager im Vergleich zu phenolharzimprägnierten Kohlelagern einen 40-50 % niedrigeren Verschleiß aufwiesen.

In einem anderen Versuch wurden erfindungsgemäß imprägnierte Kohlegleitringe auf einer Hochdruckanlage getestet (V = 5m/s, T = 29,4 bar). Das Ergebnis war positiv zu bewerten, dagegen brachten phenolharzimprägnierte Ringe unter gleichen Versuchsbedingungen mangelhafte Ergebnisse.

Kohlebürsten für Universalmotoren wurden mit Triäthylenglykoldimethycrylat imprägniert und in Laufversuchen getestet. Es konnte besonders bei mechanisch sehr unruhig laufenden Motoren — auch bei stark unrunden Kollektoren bzw. vorstehenden Lamellen — eine Verbesserung der Bürstenlebensdauer um 40-50 % gegenüber nicht imprägnierten Bürsten bei gleichzeitig besserer Kommutatorschonung ermittelt werden.

Diese Untersuchungen zeigen, daß erfindungsgemäß imprägnierte Kohlebürsten auf Universalmotoren ein elastischeres Laufverhalten bei größerer Verschleißfestigkeit zeigen als unbehandelte Kohlebürsten, während phenolharzimprägnierte Kohlebürsten ein spröderes Verhalten zeigen.

### Anspruch

Imprägnierter Kohlegleitkörper mit verbesserten Gleiteigenschaften, dadurch gekennzeichnet, daß der Kohlegleitkörper in seinen Poren polymerisiertes Triäthylenglykoldimethacrylat enthält.

### Claim

Impregnated carbon sliding body with improved sliding properties characterized thereby that the carbon sliding body contains polymerized triethyleneglycoldimethacrylate in its pores.

### Revendication

Pièce de glissement en carbone imprégné, à qualités de glissement améliorées, caractérisée en ce que la pièce de glissement en carbone contient dans ses pores du diméthacrylate de triéthylène-glycol à l'état polymérisé.